# FASCICULE DE BREVET EUROPEEN

(11) **EP 2 797 846 B1**
(45) Date de publication et mention de la délivrance du brevet: **10.05.2017**
(21) Numéro de dépôt: 12819090.7
(22) Date de dépôt: 18.12.2012
(51) Int. Cl.: C03B 5/03, C03B 5/20, C03B 5/26, C03B 37/04

(54) **PROCÉDÉ DE FIBRAGE DE MATIÈRES VITRIFIABLES**
VERFAHREN ZUM ZIEHEN VON VERGLASBAREN MATERIALIEN
METHOD FOR SPINNING VITRIFIABLE MATERIALS

(30) Priorité: 28.12.2011 FR 1162500
(43) Date de publication de la demande: 05.11.2014
(73) Titulaire: Saint-Gobain Isover, 92400 Courbevoie (FR)
(72) Inventeur: MAUGENDRE, Stéphane, F-60460 Precy Sur Oise (FR); SZALATA, François, F-60700 Laigneville (FR); CLATOT, Richard, F-60700 Fleurines (FR)
(74) Mandataire: Saint-Gobain Recherche
(86) Numéro de dépôt international: PCT/FR2012/052978
(87) Numéro de publication internationale: WO 2013/098504

(56) Documents cités:
- EP-A1- 0 616 982
- FR-A- 553 128
- FR-A- 1 260 542
- JP-A- 63 176 313
- US-A- 4 349 376
- US-A- 6 044 667

## Description

L'invention concerne un procédé de fabrication de fibres minérales comprenant la fusion de matières vitrifiables dans un four circulaire à électrodes, l'alimentation d'un canal de distribution par ces matières fondues puis leur transformation en fibres.

Le four utilisé dans le cadre de l'invention est un four dit à voûte froide permettant de fondre des matières vitrifiables par la chaleur dégagée par effet Joule à partir d'électrodes plongeant dans les matières vitrifiables. La composition solide de matières vitrifiables est apportée par le dessus et forme une couche supérieure recouvrant complètement le bain de matières en fusion. Selon l'art antérieur, les matières fondues sont extraites par la sole ou latéralement par une gorge pour passer dans un canal de distribution alimentant des dispositifs de fibrage. Le fibrage a lieu en continu directement après la fusion des matières vitrifiables. Lorsqu'une gorge est utilisée entre le four et le canal de distribution, on observe l'usure rapide des réfractaires délimitant la gorge, en particulier la partie supérieure de celle-ci. En effet, malgré l'utilisation de systèmes de refroidissement permettant de limiter l'attaque des réfractaires par les matières fondues à haute température, ces réfractaires doivent généralement être remplacés plus rapidement que les autres éléments en réfractaire du four. Un tel remplacement nécessite en outre l'arrêt du four. Par ailleurs, une gorge simple n'est ni un moyen de régulation du flux ni un moyen de réglage de la température de la matière fondue. La température de la matière fondue est en effet une donnée essentielle pour l'obtention d'un fibrage de bonne qualité. L'obtention de la bonne température de matière fondue au niveau du fibrage s'obtient en premier lieu par le réglage de l'intensité électrique délivrée par les électrodes. Le design du canal de distribution comme sa longueur, son isolation thermique et ses moyens de chauffage propres permettent également d'influer sur cette température. La régulation de tout le procédé de fibrage est particulièrement difficile et peut nécessiter une longue période de tâtonnement. Cette difficulté est d'autant plus grande que ce type de four fonctionne généralement pour des campagnes de fabrication relativement courtes en durées et les temps de transition (durée de stabilisation de la fabrication à partir du commencement) sont donc longs comparés à la durée de fonctionnement en régime permanent. Ce type de fabrication fonctionne généralement avec des tirées comprises entre 5 et 100 tonnes par jour. C'est le passage du verre dans les filières de fibrage qui limite la tirée. La transformation en fibres est donc l'étape déterminante du flux de verre au travers de tout le procédé (tirée). C'est pourquoi la hauteur du barrage ne régule que la température et pas le débit. Ce type de four aux dimensions relativement modestes (surface interne de sole comprise entre 1 m² et 30 m²) est très flexible et peut être arrêté facilement à tout moment selon les circonstances. Il peut généralement fonctionner sans discontinuer entre 24 heures et 6 mois, voire plus.

Le US6314760 enseigne un four circulaire à électrodes et à sole conique alimentant un canal de distribution, le flux de verre entre le four et le canal passant par un tube en molybdène entouré d'une enveloppe parcourue par de l'eau de refroidissement. Ce document n'offre aucune solution pour réguler le flux de verre et la température du verre sortant du four.

Le US3912488 enseigne un four circulaire à électrodes et à sole conique comprenant un orifice d'extraction des matières fondues au niveau du sommet du cône de la sole, ledit orifice étant refroidi par une circulation d'eau.

Le EP-A-616982 enseigne un four électrique verrier dont les électrodes sont fixées en sole. La finalité du verre fabriqué n'est pas précisée. Le verre sortant du four passe par une gorge comprenant un barrage mobile en hauteur.

Le FR-A-1260542 enseigne un four verrier à brûleurs aérien. Le verre sortant du four passe sous un barrage refroidi à l'eau. L'effet du barrage est un ralentissement du courant de verre accompagné d'un réglage de sa température.

L'invention contribue à remédier aux problèmes susmentionnés en offrant une possibilité supplémentaire du réglage de la température de la matière vitrifiable fondue. On a en effet observé que dans ce type de four circulaire, un gradient de température vertical existait dans les matières vitrifiables, les matières les plus chaudes étant en haut juste en-dessous de la croute de matières vitrifiables non encore fondues, et plus on se rapproche de la sole, moins elles sont chaudes. On a également observé que l'on pouvait agir sur la température du flux de matières fondues passant du four vers le canal de distribution en jouant sur la profondeur d'un barrage mobile verticalement et situé latéralement par rapport au four, entre le four et le canal de distribution. Plus le barrage est bas et plus la température des matières fondues passant sous lui est basse, et vice versa.

Ainsi, l'invention concerne un procédé de fabrication de fibres minérales comprenant l'introduction de matières premières dans un four circulaire à électrodes, puis la fusion des matières premières dans ledit four pour former une matière vitrifiable fondue, ledit four comprenant des électrodes plongeant par le dessus dans les matières vitrifiables, puis l'écoulement de la matière vitrifiable fondue dans le four par une sortie latérale du four pour alimenter un canal de distribution, puis l'écoulement de la matière vitrifiable fondue par un orifice en sole du canal de distribution pour alimenter un dispositif de fibrage, puis la transformation en fibres de la matière vitrifiable fondue par ledit dispositif de fibrage, le flux de matière vitrifiable fondue entre le four et le canal de distribution passant sous un barrage métallique réglable en hauteur comprenant une enveloppe refroidie par un courant de fluide de refroidissement, la transformation en fibres étant l'étape déterminante de la tirée du procédé.

Le gradient de température vertical dans les matières fondues dans le four est d'autant plus élevé que les matières vitrifiables absorbent plus fortement les infrarouges. La présence d'oxyde de fer dans la composition fondue contribue à l'absorption des infrarouges. Ainsi, le procédé selon l'invention est particulièrement adapté lorsque la matière fondu contient plus de 2 % en poids d'oxyde de fer (somme de toutes les formes d'oxyde de fer) et même plus de 3% et même plus de 4% en poids d'oxyde de fer. Généralement, la matière fondue contient moins de 20% en poids d'oxyde de fer. Le procédé selon l'invention est notamment adapté lorsque la matière fondue comprend de 1 à 30% en poids d'alumine, et même 15 à 30% en poids d'alumine. Par exemple, il peut être utilisé pour fondre des verres pour fibres aux compositions décrites dans l'un ou l'autre des documents WO99/57073, WO99/56525, WO00/17117, WO2005/033032, WO2006/103376.

La température de fibrage idéale dépend de la composition de la matière fondue. Généralement, on cherche à ce que sa viscosité soit comprise entre 25 Pa.s et 120 Pa.s. Ainsi, selon l'invention, on peut régler la hauteur du barrage pour que la viscosité de la matière vitrifiable fondue soit comprise dans ce domaine. En effet, la hauteur du barrage influe directement sur la température de la matière vitrifiable et donc sur sa viscosité. La hauteur du barrage est donc déterminée (c'est-à-dire réglée) pour que la viscosité de la matière vitrifiable fondue soit comprise entre 25 Pa.s et 120 Pa.s dans le dispositif de fibrage.

L'invention est adaptée au fibrage de verre ou de roche.

La température de la matière vitrifiable fondue passant sous le barrage est choisie comme étant supérieure à la température de dévitrification de la matière vitrifiable. Généralement, la température de la matière vitrifiable passant sous le barrage est comprise entre 850 et 1700°C. Pour une matière vitrifiable comprenant au moins 15% en poids d'alumine, notamment 15 à 30% d'alumine, la température de la matière vitrifiable passant sous le barrage est généralement comprise entre 1200 et 1700°C. On ajuste donc la hauteur du barrage pour que la matière fondue passant sous lui soit dans le bon domaine de température. Le barrage selon l'invention permet donc une véritable régulation du procédé selon l'invention.

L'invention est adaptée à tous types de verre ou roche. Cependant, plus la matière vitrifiable absorbe les infrarouges (IR), plus l'invention est intéressante. En effet, plus la matière vitrifiable absorbe les IR, plus les transferts thermiques sont limités et plus on observe un gradient thermique important de la sole à la croûte de matière premières surnageant au-dessus de la matière vitrifiable en fusion. La sole est ainsi d'autant plus froide que la matière vitrifiable absorbe plus les IR. Ceci est favorable à la durée dans le temps de la sole. Une matière vitrifiable absorbant moins les IR est par exemple un verre du type borosilicate. Un verre absorbant plus les IR est par exemple un verre automobile utilisé comme écran solaire pour les toits ouvrants.

Le barrage est en métal et creux de sorte qu'un fluide de refroidissement peut parcourir son intérieur. Le barrage peut être réalisé à partir de tôles métalliques que l'on soude. Avantageusement, les soudures sont à l'intérieur du barrage. Le métal du barrage peut être l'acier comme l'acier AISI 304. La partie immergée du barrage peut être totalement en un tel acier. Des canalisations sont reliées par le dessus du barrage pour permettre l'arrivée et le départ du fluide de refroidissement. Avantageusement, le fluide de refroidissement est l'eau liquide. Il s'agit d'eau courante dont la température avant passage dans le barrage est généralement comprise entre 5 et 50°C, de préférence entre 20 et 40°C (de l'eau trop froide de température inférieure à 10° risquerait de provoquer de la condensation d'eau sur l'installation). Le fluide de refroidissement peut éventuellement être de l'air. Le barrage est généralement d'une hauteur suffisante pour pouvoir éventuellement bloquer entièrement le flux de matières fondues entre le four et le canal de distribution. Avantageusement, la section du barrage a une forme trapézoïdale, c'est-à-dire que ses deux grandes faces peuvent se rapprocher quand on va vers le bas. Il est ainsi plus facile de retirer le barrage si celui-ci est emprisonné dans de la matière vitrifiable solidifiée. La largeur du barrage correspond sensiblement à la largeur du passage pour la composition fondue coulant vers le canal de distribution, ce qui correspond sensiblement à la largeur du canal de distribution. La largeur du passage pour la matière vitrifiable fondue sous le barrage et du barrage lui-même est généralement comprise entre 20 et 60 cm (largeur mesurée transversalement à la direction d'écoulement de la matière vitrifiable).

Le four est circulaire. La sole du four peut être plate ou peut comprendre une surface inclinée. La surface inclinée de la sole permet d'entrainer la matière vitrifiable fondue vers le point le plus bas de la sole en début de fusion. En effet, il est avantageux de rassembler le faible volume de matière vitrifiable fondue au début du remplissage du four pour former un point chaud accumulant la chaleur. Cela permet d'aller plus vite en début de remplissage et en quelque sorte d'amorcer le fonctionnement du four. La surface inclinée peut-être celle d'un cône renversé dont le sommet est le point le plus bas de la sole du four. Il peut également s'agir d'un plan incliné dont l'intersection avec la paroi cylindrique du four constitue une ligne courbe, laquelle présente un point le plus bas de la sole. D'autres formes sont possibles, l'idée étant que la sole comprenne un angle concave vers le haut vers lequel la matière vitrifiable fondue coule en début de remplissage du four pour s'accumuler. Cet angle peut être formé par la rencontre de la sole et de la paroi latérale du four. Les matières premières sont donc de préférence orientées vers cet angle au moins en début de remplissage du four. Si cet angle n'est pas en position centrale dans la sole, on peut prévoir de canaliser dans un premier temps les matières premières solides vers cet angle, puis lorsqu'un niveau suffisant de matière vitrifiable fondue est atteint, on canalise les matières premières solides plus au-dessus du centre de la sole. On peut également orienter les matières premières solides vers cet angle concave de la sole lorsqu'on souhaite mettre le four en veille (arrêt de la tirée, pas d'alimentation en composition et maintient du four chaud). De préférence, les électrodes sont à proximité de l'endroit où sont introduites les matières premières. Ainsi, si celles-ci sont susceptibles d'être introduites successivement en plusieurs endroits, on prévoit avantageusement de pouvoir déplacer les électrodes afin de pouvoir leur faire suivre l'endroit d'introduction des matières premières.

L'intérieur du four est muni de réfractaires venant en contact avec les matières vitrifiables, tant au niveau de la sole que de la paroi latérale. La paroi latérale comprend généralement une enveloppe métallique extérieure en contact avec l'air ambiant. Cette enveloppe métallique comprend en générale deux cloisons entre lesquelles circule de l'eau de refroidissement (système non-représenté sur les figures). Des électrodes plongent dans les matières vitrifiables par le dessus. Ces électrodes comprennent généralement une partie en molybdène plongeant dans les matières vitrifiables et une partie en acier au-dessus des matières vitrifiables reliées à une tension électrique. Ainsi, la partie des électrodes en contact avec les matières vitrifiables est généralement en molybdène. Il semble que les électrodes en molybdène réagissent progressivement avec l'oxyde de fer présent dans les matières vitrifiables en favorisant la présence de FeO au détriment de Fe₂O₃, ledit FeO absorbant particulièrement les IR, ce qui va dans le sens d'une augmentation du gradient de température de la sole jusqu'en dessous de la croûte de matières premières. L'introduction des électrodes par le dessus présente plusieurs avantages par rapport à la configuration selon laquelle les électrodes passeraient par la sole. En effet, le passage par la sole nécessiterait la réalisation de blocs d'électrodes faisant le lien entre l'électrode et la sole, blocs particulièrement délicats à réaliser du fait que la sole est aussi refroidie par une enveloppe métallique. Une électrode dans le four constitue une zone plus chaude et les blocs d'électrode en matériau céramique réfractaire seraient corrodés particulièrement rapidement. De plus, le fait de plonger les électrodes par le dessus concourt à favoriser un gradient de température montant du bas vers le haut, du fait même de ce que les électrodes chauffent en haut, combiné en plus à la formation de FeO préférentiellement autour des électrodes, donc également en haut. Le nombre d'électrodes est adapté en fonction de la taille et de la tirée du four. Le four n'est généralement pas équipé de moyens d'agitation des matières vitrifiables (pas d'agitateur mécanique ni de brûleur immergé) sauf éventuellement du type bouillonneur. Le four est équipé de moyens d'introduction des matières vitrifiables. Celles-ci sont généralement en poudre, voire en granulés, généralement jusqu'à un diamètre de 10 mm. Les matières vitrifiables sont réparties de façon homogène sur toute la surface interne du four pour former une croûte recouvrant les matières fondues. Comme moyen d'introduction des matières vitrifiables, on peut utiliser un cône tournant au-dessus de la surface interne du four. On fait tomber les matières vitrifiables sur le cône tournant dont la rotation les projette de façon uniforme sur toute la surface interne du four. Les matières vitrifiables non encore fondues forment une croûte en surface au-dessus des matières vitrifiables fondues. Cette croûte forme un écran thermique limitant les pertes thermiques par le dessus. Grâce à cela, la voute du four peut être en simple acier chaudronné, sans moyen de refroidissement particulier. La surface interne du four est généralement comprise entre 1 et 25 m². En fonctionnement, la profondeur de matières vitrifiables (fondues + non fondues) est généralement comprise entre 20 et 60 cm. La tirée en matières vitrifiables fondues peut généralement être comprise entre 5 et 100 tonnes par jour.

Le canal de distribution comprend au moins un orifice en sa sole. Il peut en comprendre 2 ou 3 ou plus selon le nombre de dispositifs de fibrage à alimenter simultanément. Le filet de matières vitrifiables fondues tombant au travers de cet orifice est ensuite orienté vers une machine de fibrage.

La transformation en fibres peut être réalisée par un dispositif dit de centrifugation interne. Le principe du procédé de centrifugation interne est bien connu en lui-même de l'homme du métier. Schématiquement, ce procédé consiste à introduire un filet de matière minérale fondue dans un centrifugeur, encore appelé assiette de fibrage, tournant à grande vitesse et percé à sa périphérie par un très grand nombre d'orifices par lesquels la matière fondue est projetée sous forme de filaments sous l'effet de la force centrifuge. Ces filaments sont alors soumis à l'action d'un courant annulaire d'étirage à température et vitesse élevées longeant la paroi du centrifugeur, courant qui les amincit et les transforme en fibres. Les fibres formées sont entraînées par ce courant gazeux d'étirage vers un dispositif de réception généralement constitué par une bande perméable aux gaz. Ce procédé connu a fait l'objet de nombreux perfectionnements dont notamment ceux enseignés dans les demandes de brevet européen N° EP0189354, EP0519797 ou EP1087912.

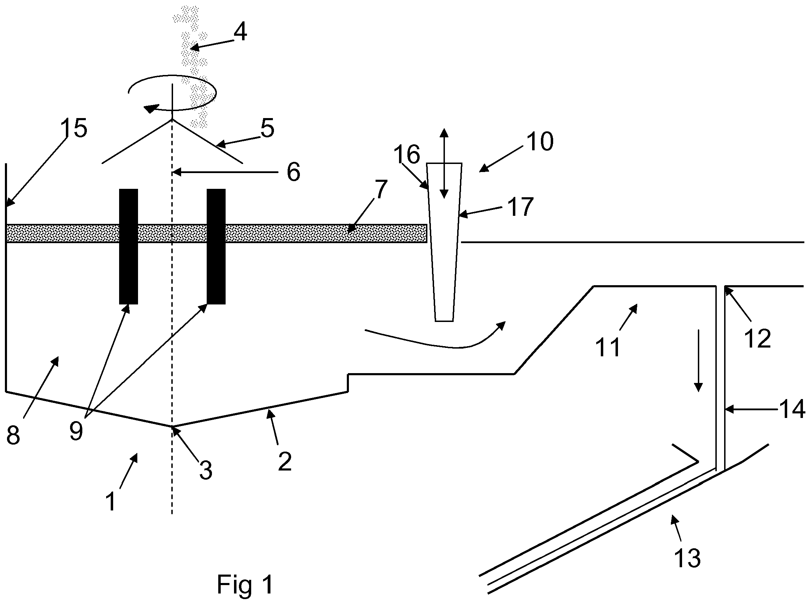

La figure 1 représente les éléments permettant au procédé selon l'invention de fonctionner en continu de la fusion jusqu'au fibrage. Un four circulaire 1 comprenant une sole 2 comprenant une surface inclinée et une paroi latérale 15 du type cylindrique, est alimenté en matières vitrifiables 4 tombant sur un cône métallique 5 tournant autour d'un axe 6 vertical. Cette rotation permet de distribuer les matières vitrifiables sur une plus grande surface autour de l'axe central 6. La surface inclinée fait partie d'un cône dont le sommet 3 est tourné vers le bas, formant un angle concave vers le haut. Les matières vitrifiables non encore fondues forment une croûte 7 en surface avant de fondre et d'alimenter le bain 8 de matières fondues. Les électrodes 9 produisent les calories nécessaires à la fusion des matières vitrifiables. Les matières fondues quittent le four 1 en passant sous le barrage 10 réglable en hauteur et refroidi par une circulation d'eau. Elles arrivent ensuite dans le canal de distribution 11 muni d'orifices 12 (un seul orifice est représenté, d'autres orifices pouvant être présents plus loin sur la droite du canal). Elles coulent à travers les orifices 12 pour former un filet 14 et tombent dans une goulotte 13 pour ensuite alimenter un dispositif de fibrage non représenté. Le barrage 10 a une section trapézoïdale (trapèze parallèle au plan de la figure et visible sur celle-ci), c'est-à-dire que ses plus grandes faces 16 et 17 se rapprochent vers le bas.

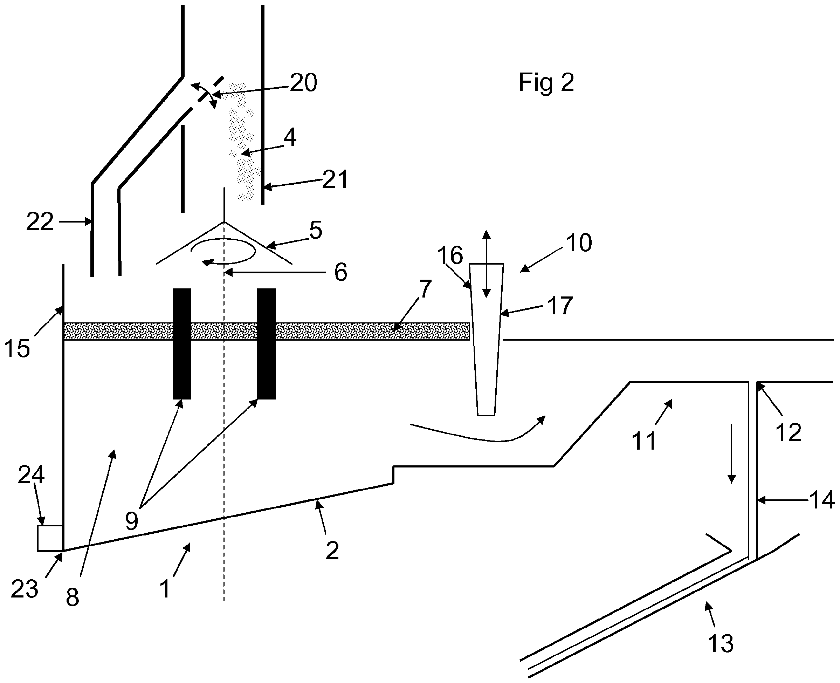

La figure 2 représente les éléments permettant au procédé selon l'invention de fonctionner en continu de la fusion jusqu'au fibrage. On retrouve tous les éléments de la figure 1 sauf que la sole 2 a ici la forme d'un plan incliné. L'intersection de cette sole 2 avec la paroi 15 cylindrique forme une arrête courbe comprenant un point le plus bas 23. La rencontre de la sole et de la paroi latérale forme en ce point le plus bas un angle concave vers le haut susceptible de recevoir la matière vitrifiable fondue. Un système de by-pass 20 permet d'orienter les matières premières soit vers une canalisation 21 distribuant celles-ci de façon centrale au-dessus du cône 5, soit vers une canalisation 22 distribuant ces matières vitrifiables à proximité du point le plus bas 23 de la sole 2. La distribution par la canalisation 22 est réalisée en début de remplissage du four de façon à accumuler dans le coin 23 un maximum de matière en fusion le plus vite possible. Ce rassemblement des matières fondues en faible quantité en début de procédé permet d'amorcer le four. Lorsque les matières premières sont engagées via la canalisation 22 près de la verticale passant par le point le plus bas 23 de la sole, les électrodes 9 sont également déplacées, horizontalement, pour se trouver à proximité d'une verticale passant par le point le plus bas 23. Un bouchon de vidange 24 permet le cas échéant de vidanger le four.

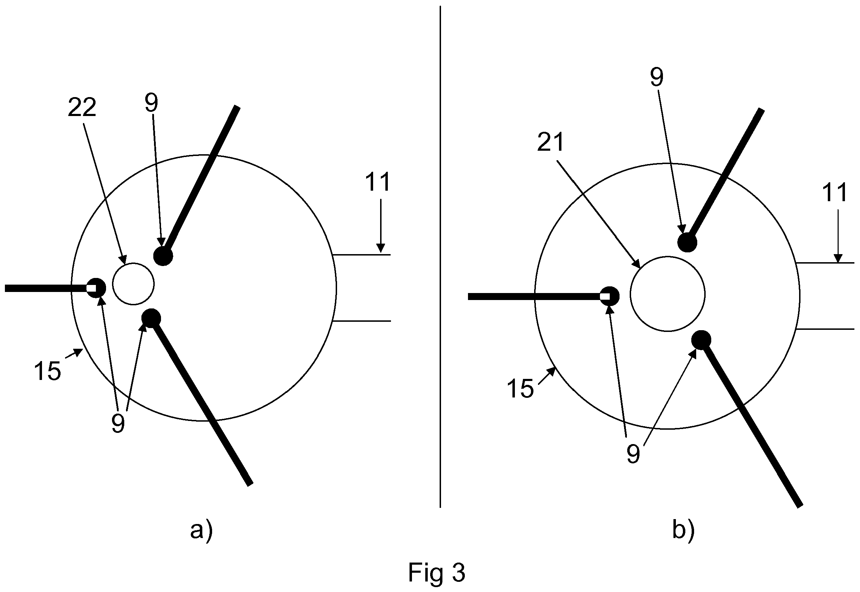

La figure 3 représente la position relative du dispositif de distribution des matières premières et des électrodes, vu de dessus, pour le four de la figure 2. on distingue la paroi cylindrique 15 du four et le canal de distribution 11. En début de remplissage (figure 3 a)), les matières premières sont introduite via la canalisation 22 le plus près possible au-dessus du point le plus bas 23 (voir figure 2). Les électrodes 9 sont situées le plus près possible au-dessus de ce point le plus bas 23. En régime continu de production (figure 3 b)), les matières premières sont introduite via la canalisation 21 au centre du four. Les électrodes 9 ont été déplacées pour entourer le centre du four.

### EXEMPLES

On introduit dans un four du type de celui représenté à la figure 1 de la matière première en poudre du type oxyde pour réaliser la composition de verre comprenant :
Silice : 43%
Alumine : 21%
Oxydes de fer : 6%
CaO+MgO : 17%
Na₂O+K₂O : 11 %
TiO₂ : 0,7%

On a apporté par des électrodes une puissance de 630 kilowatts. On a fait varier la hauteur du barrage et l'on a mesuré la température pour différentes hauteurs en régime permanent et pour une tirée constante de 10 tonnes par jours. Le tableau 1 ci-dessous rassemble les résultats pour différentes distances entre la sole et le point le plus bas du barrage.

**Tableau 1**

| Hauteur sous barrage | Température du verre juste après le barrage |
|---|---|
| 120 mm | 1350°C |
| 140 mm | 1410°C |
| 150 mm | 1450°C |

## Revendications

1. Procédé de fabrication de fibres minérales comprenant l'introduction de matières premières (4) dans un four circulaire (1) à électrodes (9), puis la fusion des matières premières dans ledit four pour former une matière vitrifiable fondue, ledit four comprenant des électrodes plongeant par le dessus dans les matières vitrifiables, puis l'écoulement de la matière vitrifiable fondue (8) dans le four par une sortie latérale du four pour alimenter un canal de distribution (11), puis l'écoulement de la matière vitrifiable fondue par un orifice (12) en sole du canal de distribution (11) pour alimenter un dispositif de fibrage, puis la transformation en fibres de la matière vitrifiable fondue par ledit dispositif de fibrage, **caractérisé en ce que** le flux de matière vitrifiable fondue entre le four (1) et le canal de distribution (11) passe sous un barrage métallique (10) réglable en hauteur comprenant une enveloppe refroidie par un courant de fluide de refroidissement, la transformation en fibres étant l'étape déterminante de la tirée du procédé.

2. Procédé selon la revendication précédente, **caractérisé en ce que** la matière vitrifiable fondue (8) comprend plus de 2% en poids d'oxyde de fer.

3. Procédé selon la revendication précédente, **caractérisé en ce que** la matière vitrifiable fondue (8) comprend plus de 3% voire plus de 4% en poids d'oxyde de fer.

4. Procédé selon l'une des revendications précédentes, **caractérisé en ce que** la matière vitrifiable fondue (8) comprend moins de 20% en poids d'oxyde de fer.

5. Procédé selon l'une des revendications précédentes, **caractérisé en ce que** la matière vitrifiable fondue (8) passant sous le barrage (10) a une température supérieure à sa température de dévitrification.

6. Procédé selon l'une des revendications précédentes, **caractérisé en ce que** la matière vitrifiable fondue (8) passant sous le barrage (10) a une température comprise entre 850 et 1700°C.

7. Procédé selon l'une des revendications précédentes, **caractérisé en ce que** la matière vitrifiable fondue (8) comprend 1 à 30% d'alumine.

8. Procédé selon la revendication précédente, **caractérisé en ce que** la matière vitrifiable fondue (8) comprend 15 à 30% d'alumine.

9. Procédé selon la revendication précédente, **caractérisé en ce que** la matière vitrifiable fondue (8) passant sous le barrage (10) a une température comprise entre 1200 et 1700°C.

10. Procédé selon l'une des revendications précédentes, **caractérisé en ce que** le barrage (10) a une largeur comprise entre 20 et 60 cm.

11. Procédé selon l'une des revendications précédentes, **caractérisé en ce que** la sole du four (1) présente une aire comprise entre 1 et 25 m².

12. Procédé selon l'une des revendications précédentes, **caractérisé en ce que** la tirée du four est comprise entre 5 et 100 tonnes par jour.

13. Procédé selon l'une des revendications précédentes, **caractérisé en ce que** la hauteur du barrage (10) est réglée pour que la viscosité de la matière vitrifiable fondue soit comprise entre 25 Pa.s et 120 Pa.s dans le dispositif de fibrage.

14. Procédé selon l'une des revendications précédentes, **caractérisé en ce que** la partie des électrodes (9) en contact avec les matières vitrifiables (8) est en molybdène.

## Patentansprüche

1. Verfahren zur Herstellung von Mineralfasern, enthaltend das Einbringen von Ausgangsmaterialien (4) in eine kreisförmige Schmelzwanne (1) mit Elektroden (9), dann das Schmelzen der Ausgangsmaterialien in der Schmelzwanne zum Bilden einer verglasbaren geschmolzenen Masse, wobei die Schmelzwanne von oben in die verglasbare Masse eintauchende Elektroden aufweist, dann das Abfließen der verglasbaren geschmolzenen Masse (8) aus der Schmelzwanne über einen seitlichen Schmelzwannenausgang zum Versorgen eines Verteilungskanals (11), dann das Abfließen der verglasbaren geschmolzenen Masse über eine Öffnung (12) am Boden des Verteilungskanals (11) zum Versorgen einer Zerfaserungseinrichtung, dann das Umwandeln der verglasbaren geschmolzenen Masse in Fasern durch die Zerfaserungseinrichtung, **dadurch gekennzeichnet, dass** der Strom der verglasbaren geschmolzenen Masse zwischen der Schmelzwanne (1) und dem Verteilungskanal (11) unter einer höhenverstellbaren Metallsperre (10) passiert, die einem mit einem strömenden Kühlmittel gekühlten Mantel aufweist, wobei die Umwandlung in Fasern der leistungsbestimmende Schritt des Verfahrens ist.

2. Verfahren nach dem vorhergehenden Anspruch, **dadurch gekennzeichnet, dass** die verglasbare geschmolzenen Masse (8) mehr als 2 Gew.-% Eisenoxid aufweist.

3. Verfahren nach dem vorhergehenden Anspruch, **dadurch gekennzeichnet, dass** die verglasbare geschmolzene Masse (8) mehr als 3 Gew.-%, insbesondere mehr als 4 Gew.-% Eisenoxid aufweist.

4. Verfahren nach einem der vorhergehenden Ansprüche, **dadurch gekennzeichnet, dass** die verglasbare geschmolzene Masse (8) mehr als 20 Gew.-% Eisenoxid aufweist.

5. Verfahren nach einem der vorhergehenden Ansprüche, **dadurch gekennzeichnet, dass** die verglasbare geschmolzene Masse (8) beim Passieren der Sperre (10) eine größere Temperatur als ihre Entglasungstemperatur aufweist.

6. Verfahren nach einem der vorhergehenden Ansprüche, **dadurch gekennzeichnet, dass** die verglasbare geschmolzene Masse (8) beim Passieren der Sperre (10) eine Temperatur zwischen 850 und 1700°C aufweist.

7. Verfahren nach einem der vorhergehenden Ansprüche, **dadurch gekennzeichnet, dass** die verglasbare geschmolzene Masse (8) zwischen 1 und 30% Aluminiumoxid aufweist.

8. Verfahren nach dem vorhergehenden Anspruch, **dadurch gekennzeichnet, dass** die verglasbare geschmolzene Masse (8) zwischen 15 und 30% Aluminiumoxid aufweist.

9. Verfahren nach einem der vorhergehenden Ansprüche, **dadurch gekennzeichnet, dass** die verglasbare geschmolzene Masse (8) beim Passieren der Sperre (10) eine Temperatur zwischen 1200 und 1700°C aufweist.

10. Verfahren nach einem der vorhergehenden Ansprüche, **dadurch gekennzeichnet, dass** die Sperre (10) eine Breite zwischen 20 und 60 cm aufweist.

11. Verfahren nach einem der vorhergehenden Ansprüche, **dadurch gekennzeichnet, dass** der Boden der Schmelzwanne (1) eine Fläche von 1 bis 25 m² aufweist.

12. Verfahren nach einem der vorhergehenden Ansprüche, **dadurch gekennzeichnet, dass** die Leistung der Schmelzwanne zwischen 5 und 100 Tonnen pro Tag beträgt.

13. Verfahren nach einem der vorhergehenden Ansprüche, **dadurch gekennzeichnet, dass** die die Höhe der Sperre (10) derart geregelt wird, dass die Viskosität der verglasbaren geschmolzenen Masse in der Zerfaserungseinrichtung zwischen 25 Pa·s und 120 Pa·s beträgt.

14. Verfahren nach einem der vorhergehenden Ansprüche, **dadurch gekennzeichnet, dass** der die verglasbare Masse (8) berührende Teil der Elektroden (9) aus Molybdän besteht.

## Claims

1. A process of fabrication of mineral fibers comprising the introduction of raw materials (4) into a circular furnace (1) with electrodes (9), then the fusion of the raw materials in said furnace in order to form a molten vitrifiable material, said furnace comprising electrodes immersed from above in the vitrifiable materials, then the outflow of the molten vitrifiable material (8) in the furnace via a lateral outlet from the furnace so as to supply a distribution channel (11), then the outflow of the molten vitrifiable material via an orifice (12) in the bottom of the distribution channel (11) so as to supply a fiber forming device, then the transformation into fibers of the molten vitrifiable material by said fiber forming device, **characterized in that** the flow of molten vitrifiable material between the furnace (1) and the distribution channel (11) passes under a metal dam (10) being adjustable in height comprising an envelope cooled by a flow of cooling fluid, the transformation into fibers being the step that determines the output of the process.

2. The process as claimed in the preceding claim, **characterized in that** the molten vitrifiable material (8) comprises more than 2% by weight of iron oxide.

3. The process as claimed in the preceding claim, **characterized in that** the molten vitrifiable materials (8) comprise more than 3% or even more than 4% by weight of iron oxide.

4. The process as claimed in one of the preceding claims, **characterized in that** the molten vitrifiable material (8) comprises less than 20% by weight of iron oxide.

5. The process as claimed in one of the preceding claims, **characterized in that** the molten vitrifiable material (8) passing under the dam (10) has a temperature greater than its devitrification temperature.

6. The process as claimed in one of the preceding claims, **characterized in that** the molten vitrifiable material (8) passing under the dam (10) has a temperature in the range between 850 and 1700°C.

7. The process as claimed in one of the preceding claims, **characterized in that** the molten vitrifiable material (8) comprises 1 to 30% of alumina.

8. The process as claimed in the preceding claim, **characterized in that** the molten vitrifiable material (8) comprises 15 to 30% of alumina.

9. The process as claimed in the preceding claim, **characterized in that** the molten vitrifiable material (8) passing under the dam (10) has a temperature in the range between 1200 and 1700°C.

10. The process as claimed in one of the preceding claims, **characterized in that** the dam (10) has a width in the range between 20 and 60 cm.

11. The process as claimed in one of the preceding claims, **characterized in that** the bottom of the furnace (1) has a surface area in the range between 1 and 25 m².

12. The process as claimed in one of the preceding claims, **characterized in that** the output of the furnace is in the range between 5 and 100 tons per day.

13. The process as claimed in one of the preceding claims, **characterized in that** the height of the dam (10) is adjusted such that the viscosity of the molten vitrifiable material is in the range between 25 Pa.s and 120 Pa.s in the fiber forming device.

14. The process as claimed in one of the preceding claims, **characterized in that** the part of the electrodes (9) in contact with the vitrifiable materials (8) is made of molybdenum.
